# EUROPEAN PATENT APPLICATION

(11) **EP 1 793 368 A2**
(43) Date of publication of application: **06.06.2007**
(21) Application number: 06077086.4
(22) Date of filing: 23.11.2006
(51) Int. Cl.: G09G 3/34

(54) **Backlight unit, driving method of the same and liquid crystal display device having the same**

(30) Priority: 01.12.2005 KR 20050116357
(71) Applicant: Samsung Electronics Co., Ltd., Yeongtong-gu Suwon-si, Gyeonggi-do (KR)
(72) Inventor: Kang, Joon, Gwanak-gu Seoul (KR); Cho, Jin-hyun, Seoul (KR); Kim, Sung-ki, Seocho-gu Seoul (KR)
(74) Representative: Hylarides, Paul Jacques

(57) **Abstract**

A backlight unit (100) includes a light source (50a,50b) including a light emitting diode (52), a temperature sensor (81) to measure a temperature of the light source, a light source driver (56a,56b) to supply power to the light source, and a controller (55) to control the light source driver based on the temperature measured by the temperature sensor.

## Description

This application claims priority from Korean Patent Application No. 2005-0116357, filed on December 1, 2005, in the Korean Intellectual Property Office, the disclosure of which is incorporated herein by reference in its entirety.

### BACKGROUND OF THE INVENTION

### Field of the Invention

The present general inventive concept relates to a backlight unit, a driving method of the same, and a liquid crystal display device having the same, and more particularly, to a backlight unit, which is capable of emitting light uniformly by reducing a difference in temperature between light sources, a driving method of the same, and a liquid crystal display device having the same.

### Description of the Related Art

In recent years, flat display devices, including liquid crystal displays (LCDs), plasma display panels (PDPs), organic light emitting diodes (OLEDs), etc., have been actively developed as substitutions for cathode ray tubes (CRTs).

An LCD device includes an LCD panel including a thin film transistor substrate, a color filter substrate, and a liquid crystal layer interposed between the substrates. Since the LCD panel cannot emit light by itself, a backlight unit has to be located in a rear side of the thin film transistor substrate so as to provide light to the LCD panel. The light emitted from the backlight unit is adjusted in its amount of transmission through the LCD panel depending on alignment conditions of molecules in liquid crystal of the liquid crystal layer. Cold cathode fluorescence lamps or external electrode fluorescence lamps are used as light sources of the backlight unit. Light emitting diodes emit red, green and blue color light, a mixture of which is provided as white light to the LCD panel.

The backlight unit may be divided into an edge type and a direct type depending on a position of the light sources. With the light sources arranged in a side of a light guide plate, the edge type backlight unit is mainly used in a relatively small LCD device such as a monitor of a laptop computer or a desktop computer.

On the other hand, with the light sources arranged immediately under the LCD panel, the direct type backlight unit is suitable for achievement of high luminescence of the LCD panel with the number of light sources increased.

However, the LCD device comprising the backlight unit has a problem of irregular luminescence depending on temperature of the light sources.

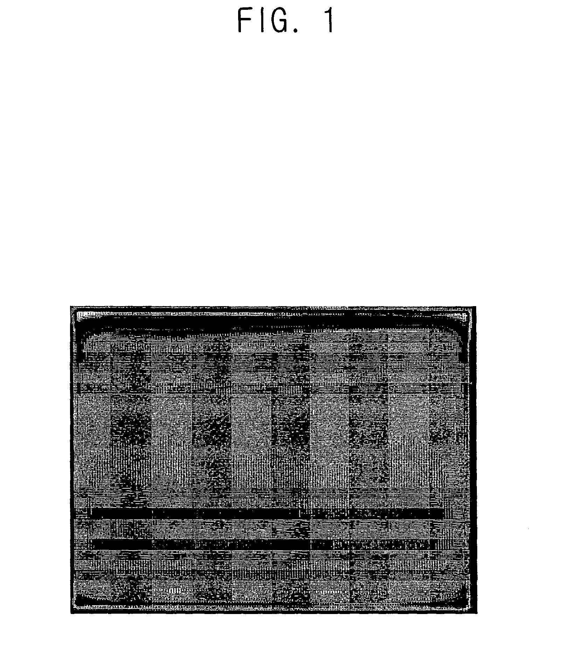

FIG. 1 is a view illustrating a temperature distribution of a conventional LCD device. The conventional LCD device in FIG. 1 employs an edge type backlight unit, in which light sources are provided as a pair and arranged along a lower side and an upper side of an image. In FIG. 1, a reddish portion (dark portion) indicates a portion with higher temperature, that is, temperature is high along the light sources, in particular, an upper light source.

The temperature of the upper light source is higher than that of a lower light source when the upper side light source is disposed higher than the lower light source in a vertical direction of the LCD device:
In the LCD device, heat generated from the lower light source moves to the upper light source by natural convection current. Then, the temperature of the upper light source increases higher than the temperature of the lower light source due to the heat transferred from the lower light source. Accordingly, if the LCD device employs, as light sources, light emitting diodes having a characteristic that their luminescence decreases as their temperature increases, the upper light source provides lower luminescence than the lower light source, which results in irregular luminescence of a display screen of the LCD device.

### SUMMARY OF THE INVENTION

The present general inventive concept provides a backlight unit emitting light uniformly.

The present general inventive concept provides a control method of the backlight unit emitting light uniformly.

The present general inventive concept provides a liquid crystal display device having a backlight unit emitting light uniformly.

Additional aspects and advantages of the present general inventive concept will be set forth in part in the description which follows and, in part, will be obvious from the description, or may be learned by practice of the general inventive concept.

The foregoing and/or other aspects of the present general inventive concept may be achieved by providing a backlight unit including a light source including a light emitting diode, a temperature sensor to measure temperature of the light source a light source driver to supply power to the light source, and a controller to control the light source driver based on the temperature measured by the temperature sensor.

The controller may control the light source driver to reduce the power supplied to the light source when the temperature of the light source becomes higher than a predetermined temperature.

The light source may comprise a first sub-light source located in an upper portion and a second sub-light source located in a lower portion, and the light source driver may include a first sub-light source driver to supply the power to the first sub-light source and a second sub-light source driver to supply the power to the second sub-light source.

The temperature sensor may measure temperature of one of the first sub-light source and the second sub-light source.

The temperature sensor may measure the temperature of the first sub-light source, and the controller may control the light source driver to reduce the power supplied to the first sub-light source when the temperature of the first sub-light source becomes higher than a predetermined temperature.

The temperature sensor may measure the temperature of the second sub-light source, and the controller may control the light source driver to reduce the power supplied to the second sub-light source when the temperature of the second sub-light source becomes higher than a predetermined temperature.

The temperature sensor may comprise a first temperature sensor measuring temperature of the first sub-light source and a second temperature sensor measuring temperature of the second sub-light source.

The controller may control the light source driver to apply relatively low power to one of the first sub-light source and the second sub-light source, which has higher temperature of the measured temperatures.

A difference between power supplied to the first sub-light source and power supplied to the second sub-light source is proportional to a difference in the temperatures between the first sub-light source and the second sub-light source.

The backlight unit may further include a light guide plate located between the first sub-light source and the second sub-light source.

The light guide plate may have a rectangular shape, and the first sub-light source and the second sub-light source may be located along long sides of the light guide plate.

The light emitting diode may include at least a red sub-light source to emit red color light, a blue sub-light source to emit blue color light and a green sub-light source to emit green color light, and the controller may control the light source driver to adjust power supplied to the red sub-light source based on the measured temperature.

The light source may further comprise a light emitting diode circuit substrate on which the light emitting diode is mounted, and the temperature sensor may measure the temperature of the light emitting diode circuit substrate.

The foregoing and/or other aspects of the present general inventive concept may also be achieved by providing a driving method of a backlight unit comprising a light source including a plurality of light emitting diodes, the driving method comprising measuring a temperature of the light source, and supplying power to the light source based on the measured temperature.

The light source may include a first sub-light source located in an upper portion and a second sub-light source located in a lower portion, the measuring of the temperature of the light source may include measuring the temperature of the first sub-light source, and the supplying of the power to the light source may include reducing the power supplied to the first sub-light source when the temperature of the first sub-light source becomes higher than a predetermined temperature.

The measuring of the temperature of the light source may include measuring the temperature of the second sub-light source, and the supplying of the power to the light source may include reducing the power supplied to the second sub-light source when the temperature of the second sub-light source becomes higher than a predetermined temperature.

The measuring of the temperature of the light source may include measuring the temperature of each of the first sub-light source and the second sub-light source, and the supplying of the power to the light source may include applying relatively low power to one of the first sub-light source and the second sub-light source, which has higher temperature.

The light emitting diode may include at least a red sub-light source to emit red color light, a blue sub-light source to emit blue color light and a green sub-light source to emit green color, and the supplying of the power to the light source may include adjusting the power supplied to the red sub-light source.

The foregoing and/or other aspects of the present general inventive concept may also be achieved by providing a liquid crystal display device comprising a liquid crystal display panel, a light source located in back of the liquid crystal display panel and including a light emitting diode, a temperature sensor to measure a temperature of the light source, a light source driver to supply power to the light source, and a controller to control the light source driver based on the temperature measured by the temperature sensor.

The light source may include a first sub-light source located in an upper portion and a second sub-light source located in a lower portion, and the light source driver may include a first sub-light source driver to supply power to the first sub-light source and a second sub-light source driver to supply power to the second sub-light source.

The temperature sensor may comprise a first temperature sensor measuring temperature of the first sub-light source and a second temperature sensor measuring temperature of the second sub-light source, and the controller may control the light source driver to apply relatively low power to one of the first sub-light source and the second sub-light source, which has higher temperature.

The liquid crystal display device may further include a light guide plate located between the first sub-light source and the second sub-light source.

The light emitting diode may include at least a red sub-light source to emit red color light, a blue sub-light source to emit blue color light and a green sub-light source to emit green color light and the controller may control the light source driver to adjust power supplied to the red sub-light source based on the result of temperature measurement.

The foregoing and/or other aspects of the present general inventive concept may also be achieved by providing a display device including a display panel, a light source to supply light to the display panel, a light source driver to supply power to the light source, and a controller to control the light source drive to adjust the supplied power according to location of the light source and a temperature of the light source.

The foregoing and/or other aspects of the present general inventive concept may also be achieved by providing a display device including a display panel, a first light source to supply a first light to the display panel, a second light source to supply a second light to the display panel, a light source driver to supply a first power and a second power to the first light source and to second light source, respectively, and a controller to control the light source driver to adjust at least one of the first power and the second power according to a state of the first light source and to second light source.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a view illustrating a temperature distribution of a conventional LCD device employing an edge light type backlight unit in which light sources are vertically arranged.
FIG. 2 is an exploded perspective view illustrating a liquid crystal display device according to an embodiment of the present general inventive concept;
FIG. 3 is a view illustrating arrangement of a light guide plate and light sources in the liquid crystal display device of FIG. 1;
FIG. 4 is a schematic block diagram illustrating a liquid crystal display device to control light sources according to an embodiment of the present general inventive concept;
FIG. 5 is a flow chart illustrating a method of controlling a temperature of light sources in a liquid crystal display device according to an embodiment of the present general inventive concept;
FIG. 6 is a view illustrating arrangement of light sources according to an embodiment of the present general inventive concept;
FIGS. 7A to 7C are graphical diagrams illustrating variation of characteristics of light emitting diodes depending on temperature; and
FIG. 8 is a schematic block diagram illustrating a liquid crystal display device to control light sources according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

Although an edge light type backlight unit is used as a light source in the present general inventive concept, it should be understood that the present general inventive concept is not limited thereto. A direct type backlight unit may be used as the light source in the present general inventive concept.

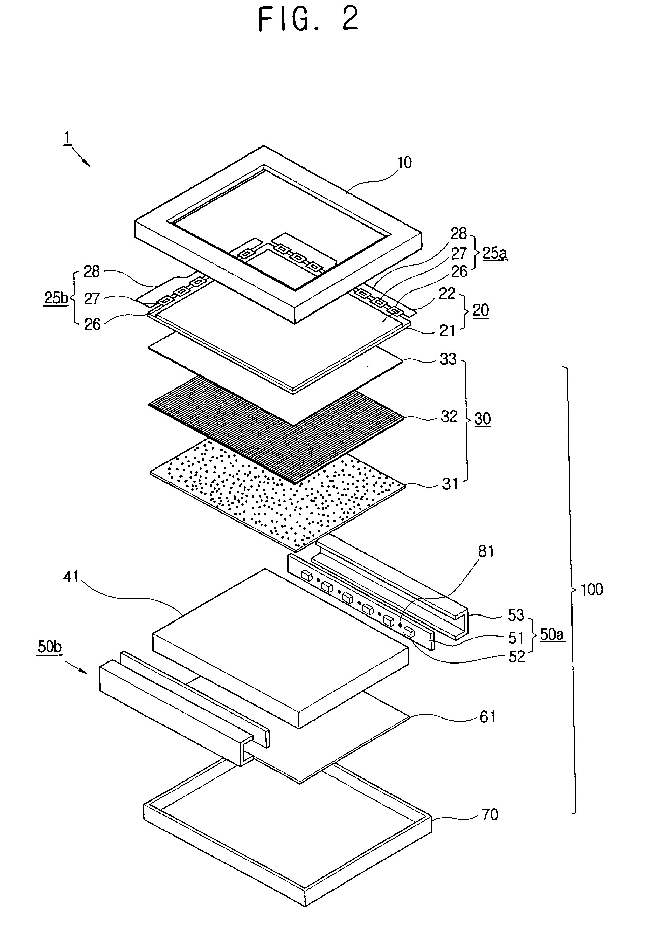

A liquid crystal display (LCD) device according to an embodiment of the present general inventive concept will be described with reference to FIGS. 2 to 4.

An LCD device 1 includes an LCD panel 20 and a backlight unit 100. The backlight unit 100 includes a light adjustment member 30, a light guide plate 41, and light sources 50a and 50b. The LCD panel 20, the light adjustment member 30, the light guide plate 41, and the light sources 50a and 50b are all disposed between a top cover 10 and a bottom cover 70.

The LCD panel 20 includes a thin film transistor (TFT) substrate 21 on which TFTs are formed, and a color filter substrate 22 facing the TFT substrate 21. A liquid crystal layer (not shown) is sandwiched between both substrates 21 and 22. The LCD panel 20 forms an image by controlling alignment of molecules in the liquid crystal layer. Since the LCD panel 20 cannot emit light by itself, it has to receive light from the light sources 50a and 50b.

At one side of the TFT substrate 21 is provided drivers 25a and 25b for application of driving signals to the TFT substrate 21. The drivers 25a and 25b include a data driver 25a connected to a long side of the LCD panel 20 of a rectangular shape to apply video signals to the TFT substrate 21, and a gate driver 25b connected to a short side of the LCD panel 20 to apply TFT on/off signals to the TFT substrate 21. Of these drivers 25a and 25b, configuration of the data driver 25a will be described below.

The data driver 25a includes a flexible printed circuit board (FPCB) 26, a driving chip 27 mounted on the FPCB 26, and a printed circuit board (PCB) 28 connected to one side of the FPCB 26. The data driver 25a may be a chip on film (COF) type. Alternatively, the data driver 25a may be other types such as a tape carrier package (TCP) type or a chip on glass (COG) type. In addition, the data driver 25a may be formed on the TFT substrate 21 in the course of forming wires.

The light adjustment member 30 located in a rear side of the LCD panel 20 may include a diffusion film 31, a prism film 32 and a protection film 33.

The diffusion film 31 comprises a base plate and a coating layer including beads formed on the base plate. The diffusion film 31 makes luminescence (light) uniform by diffusing light provided through the light guide plate 41.

The prism film 32 has a top surface on which trigonal prisms are arranged in a regular pattern. The prism film 32 condenses light, which is diffused by the diffusing film 31, in a direction perpendicular to an arrangement plane of the LCD panel 20. Two pieces of prism films 32 are typically used to condense the light, each of which has micro prisms formed at a predetermined angle. Most of light passing through the prism film 32 travels vertically to provide a uniform luminescence distribution. If necessary, a reflection polarizing film may be used together with the prism film 32, or only the reflection polarizing film may be used without the prism film 32.

The protection film 33, which is located on the prism film 32, protects the prism film 32 susceptible to scratches.

The light guide plate 41 is located below the diffusion film 31. The light guide plate 41, which is of a rectangular flat plate type, receives the light from the light sources 50a and 50b and provides the received light, as surface light, to the diffusion film 31. The light guide plate 41 may be made of polymethylmethacrylate (PMMA) of an acryl series and has a rectangular shape corresponding to the LCD panel 20.

The light sources 50a and 50b are disposed at opposite longitudinal sides of the light guide plate 41. Of these light sources 50a and 50b, configuration of the upper light source 50a disposed near the data driver 25a will be illustrated below.

The upper light source 50a includes a light emitting diode (LED) circuit substrate 51, light emitting diodes (LEDs) 52 mounted on the light emitting diode circuit substrate 51, and a light source cover 53 to partially cover the light emitting diodes 52.

The light emitting diode circuit substrate 51, which is of an elongated plate type, is disposed perpendicular to the LCD panel 20.

The light emitting diodes 52, which are arranged at a regular interval, provide white light to the light guide plate 41. Each of the light emitting diodes 52 may include sub-light emitting diodes to emit red, green and blue color light, respectively, which are mixed to generate the white light.

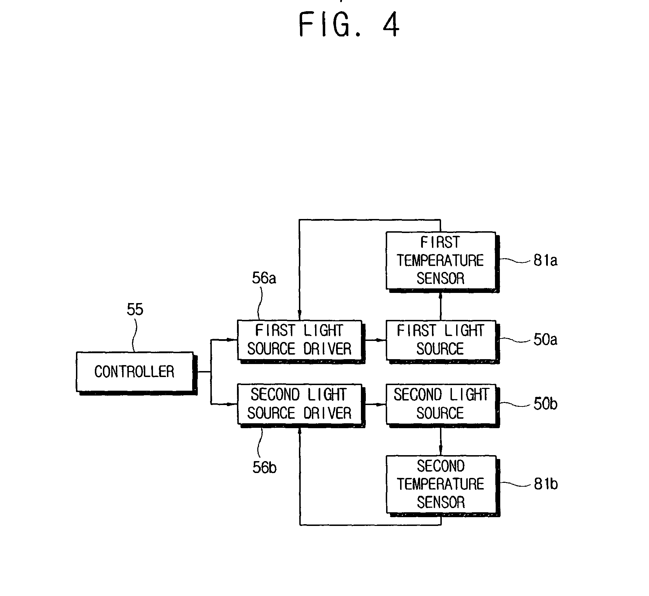

The light emitting diodes 52 are supplied with power from light source drivers 56a and 56b, which are controlled by a controller 55, through the light emitting diode circuit substrate 51 as illustrated in FIGS. 2 and 4. The light source drivers 56a and 56b and the controller 55 may be prepared on a separate circuit board, which may be located in a rear side of the bottom cover 70.

The light emitting diodes 52 are surrounded by the light source cover 53. The light source cover 53 reflects the light, which is emitted from the light emitting diodes 52, toward the light guide plate 41. The light source cover 53 may be made of an aluminum plate or the like having excellent reflectivity, and its surface facing the light emitting diodes 52 may be coated with silver.

A reflecting plate 61 is disposed below the light guide plate 41. The reflecting plate 61 reflects a portion of the light emitted from the light emitting diodes 52 and incident below the light guide plate 41, into the light guide plate 41. The reflecting plate 61 may be made of polyethyleneterephthalate (PET) or polycarbonate (PC) and may be coated with silver or aluminum.

Although not illustrated, the LCD device 1 may further include a cooling plate, a cooling fin, a cooling fan, etc., to remove heat generated by the light emitting diodes 52.

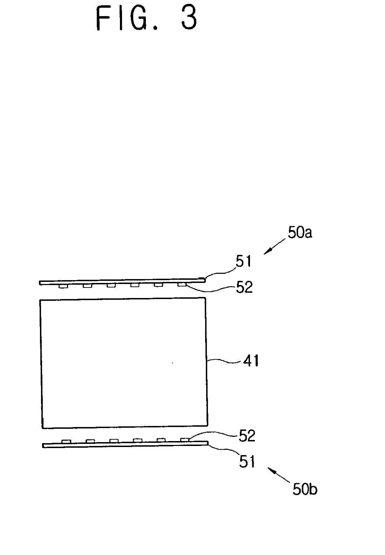

When the LCD device 1 as configured above is driven, the light emitting diodes 52 generate heat. As illustrated in FIG. 3, the LCD device 1 is typically used in a condition that the longitudinal sides of the light guide plate 41 are disposed horizontally. The light sources 50a and 50b are disposed along an upper side and a lower side of the light guide plate 41. In this condition, the heat generated in the lower light source 50b moves upward by convection current. Accordingly, the upper light source 50a increases in temperature due to the heat generated in the upper light source 50a and the heat transferred by the convection current.

The light emitting diodes 52 has a characteristic that their luminescence decreases as their temperature increases. Accordingly, the upper light source 50a is relatively lower in luminescence than the lower light source 50b, which results in non-uniformity of overall luminescence.

According to the present embodiment, this problem can be overcome by measuring the temperature of the light sources 50a and 50b and controlling power supplied to the light emitting diodes 52 based on the measured temperature.

Referring to FIG. 2, the LCD device 1 further includes a first temperature sensors 81a and a second temperature sensor 81b located between the light emitting diodes 52. The temperature sensors 81a and 81b are not limitative in their configuration and may be mounted on the light emitting diode circuit substrate 51. The temperature sensors 81a and 81b may measure a temperature of the light emitting diode circuit substrate 51 or a surface temperature of the light emitting diodes 52.

As illustrated in FIG. 4, the temperature sensors 81a and 81b measure the temperature of the light sources 50a and 50b and transmit the measured temperature to the controller 55. Based on the measured temperature, the controller 55 controls the light source drivers 56a and 56b such that the light sources 50a and 50b have the substantially same temperature.

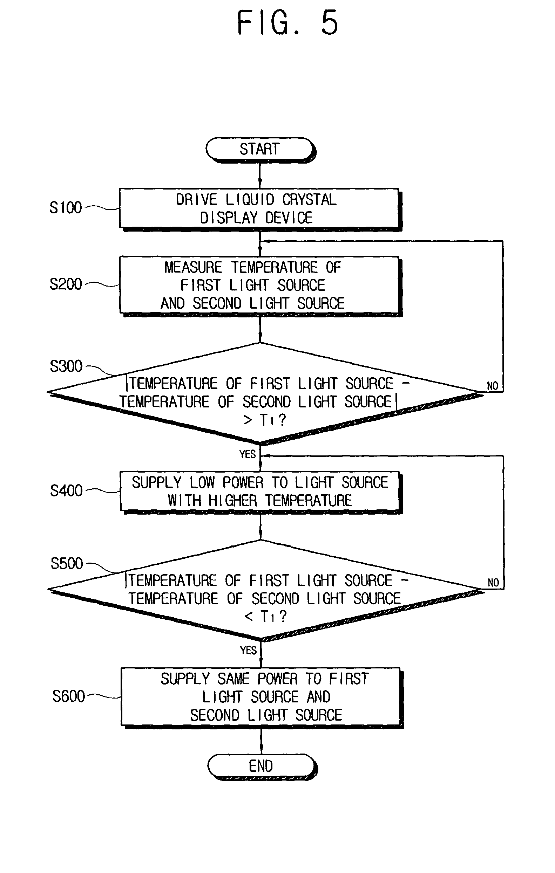

FIG. 5 is a flow chart illustrating a method of controlling temperature of light sources in a liquid crystal display device according to an embodiment of the present general inventive concept.

Referring to FIGS. 2-5, the LCD device 1 is driven at operation S100. When the light sources 50a and 50b are driven, temperature of the light sources increases.

Next, the temperature of the light sources 50a and 50b is measured at operation S200. The temperature of the upper and lower light sources 50a and 50b can be obtained by measuring the temperature of the light emitting diode circuit substrate 51 or measuring the surface temperature of the light emitting diodes 52.

Next, it is determined at operation S300 whether or not a difference in temperature between the upper light source 50a and the lower light source 50b exceeds a reference value T1. The reference value T1 may be preset in various ways, for example, between 1□ and 10□. The reference value T1 may be variable according to the measured temperature or an operation time of the light sources 50a and 50b.

If it is determined that the temperature difference exceeds the reference value T1, low power is supplied to the light source 50a or 50b with higher temperature at operation S400.

For example, if the temperature of the upper light source 50a is higher by 2□ than that of the lower light source 50b, the power to be supplied to the upper light source 50a is decreased by 5%, or if the temperature of the upper light source 50a is higher by 4□ than that of the lower light source 50b, the power to be supplied to the upper light source 50a is decreased by 10%. To this end, the controller 55 has a compensation table in which differences of supply of power depending on the temperature difference are recorded. Accordingly, the heat generated in the upper light source 50a with high temperature decreases to make the temperature of both light sources 50a and 50b similar.

Although the upper light source 50a typically has higher temperature, the lower light source 50b may have higher temperature according to an arrangement of the LCD and ambient environments.

As an alternative, if it is determined that there is a difference in temperature between the light sources 50a and 50b, it may be configured that low power is supplied to the light source 50a or 50b with higher temperature, without using the reference value T1.

Next, if it is determined at operation S500 that the temperature difference between the upper light source 50a and the lower light source 50b is less than the reference value T1, the same power is supplied to the upper light source 50a and the lower light source 50b at operation S600.

The above-described embodiment may be modified in various ways as follows:
First, the second temperature sensor 81b may be not provided. In this case, if the temperature of the upper light source 50a increases above 70□, for example, the power supplied to the upper light source 50a may be decreased to control the temperature of the upper light source 50a. The reference temperature that is used to control the supply of the power to the upper light source 50a may be between 70□ and 80□.
Second, the first temperature sensor 81a may not be provided. In this case, if the temperature of the lower light source 50b increases above 50□, for example, the power supplied to the upper light source 50a may be decreased to control the temperature of the upper light source 50a. In this case, since the temperature of the upper light source 50a is higher than that of the lower light source 50b, the reference temperature may be between 50□ and 600. Alternatively, the power supplied to the lower light source 50b may be decreased when the temperature of the lower light source 50b is higher than the reference temperature.

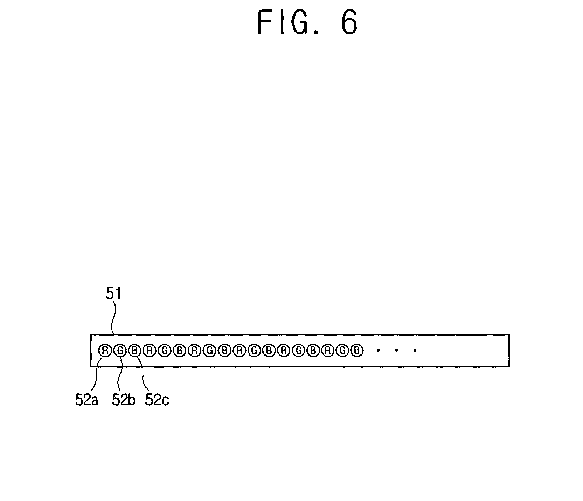

Hereinafter, an LCD device according to an embodiment of the present general inventive concept will be described with reference to FIGS. 6 to 8.

Referring to FIGS. 2 and 6, three kinds of sub-light emitting diodes 52a, 52b and 52c are mounted on the light emitting diode circuit substrate 51 as the light emitting diode 52. The sub-light emitting diodes 52a, 52b and 52c are composed of a red light emitting diode 52a, a green light emitting diode 52b, and a blue light emitting diode 52c, which are repeatedly arranged in a line.

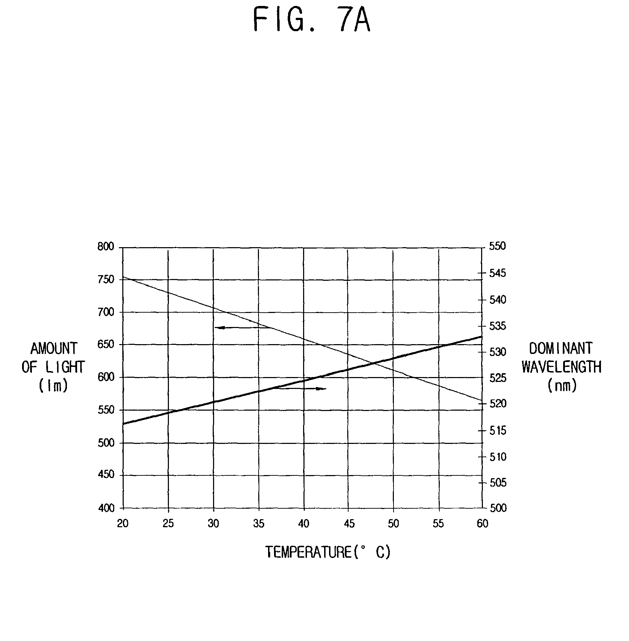

FIGS. 7A to 7C illustrate variation of characteristics of light emitting diodes depending on temperature.

For the red light emitting diode 52a, as illustrated in FIG. 7A a dominant wavelength increases by about 6 nm to 7 nm and the amount of light decreases by about 25% from about 750 lm to about 560 lm as a temperature increases from 20□ to 60□.

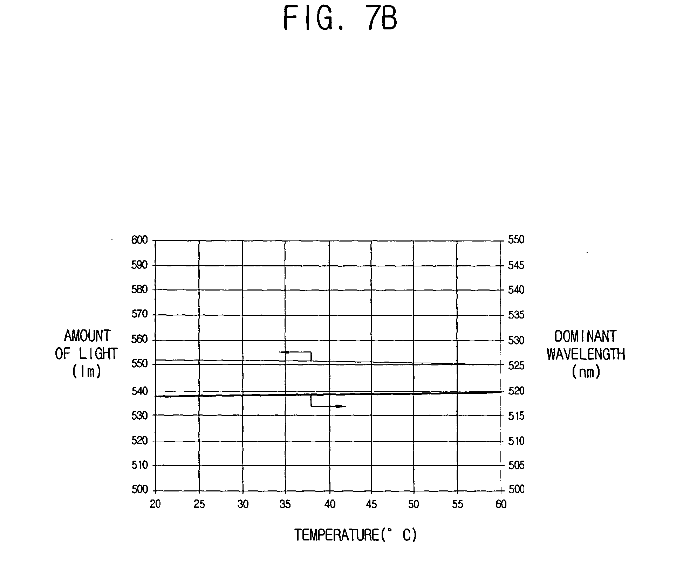

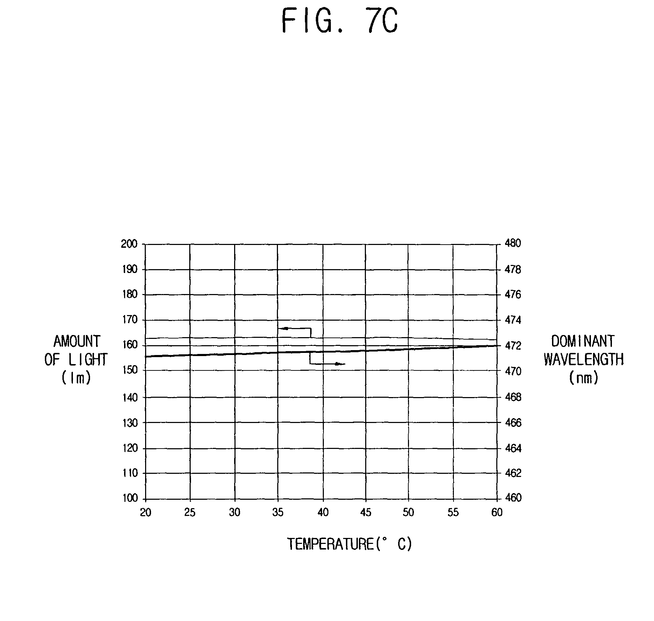

On the other hand, for the green and blue light emitting diodes 52b and 52c, as illustrated in FIGS. 7B and 7C, although the dominant wavelength increases and the amount of light decreases as the temperature increases, the amount of increase or decrease of the temperature in the green and blue light emitting diodes 52b and 52c is very small compared to the amount of increase or decrease of the temperature in the red light emitting diode 52a.

In other words, the decrease of luminescence due to the increase of the temperature is mostly due to the decrease of the luminescence of the red light emitting diode 52a.

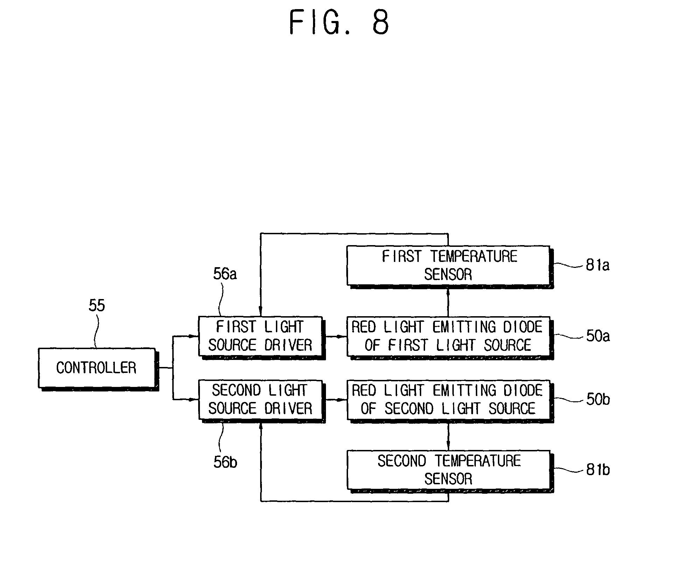

Referring to FIG. 8, the controller 55 controls only power supplied to the red light emitting diode 52a based on a result of temperature measurement. Specifically, low power is supplied to the red light emitting diode 52a with higher temperature, thus suppressing the temperature of the red light emitting diode 52a from increasing, which results in uniformity of overall luminescence.

In this method, the light of three colors emitted from the red, green, and blue light emitting diodes 52a, 52b and 52c is provided with uniform strength by increasing luminescence of reduced red color light, and thus it is advantageous for the light sources 50a and 50b in providing the white light.

As apparent from the above description, the present general inventive concept provides a backlight unit, which is capable of emitting light uniformly, and an LCD device having the same.

In addition, the present general inventive concept provides a control method of the backlight unit, which is capable of emitting light uniformly.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A backlight unit comprising:
a light source including a light emitting diode;
a temperature sensor to measure temperature of the light source;
a light source driver to supply power to the light source; and
a controller to control the light source driver based on the temperature measured by the temperature sensor.

2. The backlight unit according to claim 1, wherein the controller controls the light source driver to reduce the power supplied to the light source when the temperature of the light source becomes higher than a predetermined temperature.

3. The backlight unit according to claim 1, wherein:
the light source comprises a first sub-light source located in an upper portion and a second sub-light source located in a lower portion; and
the light source driver comprises a first sub-light source driver to supply the power to the first sub-light source and a second sub-light source driver to supply the power to the second sub-light source.

4. The backlight unit according to claim 3, wherein the temperature sensor measures the temperature of one of the first sub-light source and the second sub-light source.

5. The backlight unit according to claim 3, wherein:
the temperature sensor measures the temperature of the first sub-light source; and
the controller controls the light source driver to reduce the power supplied to the first sub-light source when the temperature of the first sub-light source becomes higher than a predetermined temperature.

6. The backlight unit according to claim 3, wherein:
the temperature sensor measures temperature of the second sub-light source; and
the controller controls the light source driver to reduce the power supplied to the second sub-light source when the temperature of the second sub-light source becomes higher than a predetermined temperature.

7. The backlight unit according to claim 3, wherein the temperature sensor comprises a first temperature sensor measuring temperature of the first sub-light source and a second temperature sensor measuring temperature of the second sub-light source.

8. The backlight unit according to claim 7, wherein the controller controls the light source driver to apply a relatively low power to one of the first sub-light source and the second sub-light source, which has a higher temperature of the measured temperatures.

9. The backlight unit according to claim 8, wherein a difference between power supplied to the first sub-light source and power supplied to the second sub-light source is proportional to a difference in the temperatures between the first sub-light source and the second sub-light source.

10. The backlight unit according to claim 3, further comprising:
a light guide plate located between the first sub-light source and the second sub-light source.

11. The backlight unit according to claim 10, wherein:
the light guide plate has a rectangular shape; and
the first sub-light source and the second sub-light source are located along longitudinal sides of the light guide plate.

12. The backlight unit according to claim 1, wherein:
the light emitting diode comprises at least a red sub-light source to emit red color light, a blue sub-light source to emit blue color light and a green sub-light source to emit green color light; and
the controller controls the light source driver to adjust the power supplied to the red sub-light source based on the measured temperature.

13. The backlight unit according to claim 1, wherein:
the light source further comprises a light emitting diode circuit substrate on which the light emitting diode is mounted; and
the temperature sensor measures the temperature of the light emitting diode circuit substrate.

14. A driving method of a backlight unit comprising including a plurality of light emitting diodes, the driving method comprising:
measuring a temperature of the light source; and
supplying power to the light source based on the measured temperature.

15. The driving method according to claim 14, wherein:
the light source comprises a first sub-light source located in an upper portion and a second sub-light source located in a lower portion;
the measuring of the temperature of the light source comprises measuring the temperature of the first sub-light source; and
the supplying of the power to the light source comprises reducing the power supplied to the first sub-light source when the temperature of the first sub-light source becomes higher than a predetermined temperature.

16. The driving method according to claim 14, wherein:
the light source comprises a first sub-light source located in an upper portion and a second sub-light source located in a lower portion;
the measuring of the temperature of the light source comprises measuring temperature of the second sub-light source; and
the supplying the power to the light source comprises reducing the power supplied to the second sub-light source when the temperature of the second sub-light source becomes higher than a predetermined temperature.

17. The driving method according to claim 14, wherein:
the light source comprises a first sub-light source located in an upper portion and a second sub-light source located in a lower portion;
the measuring of the temperature of the light source comprises measuring temperature of each of the first sub-light source and the second sub-light source; and
the supplying of the power to the light source comprises applying a relatively low power to one of the first sub-light source and the second sub-light source, which has a higher temperature of the measured temperatures.

18. The driving method unit according to claim 14, wherein:
the light emitting diode comprises at least a red sub-light source for emitting red color light, a blue sub-light source to emit blue color light and a green sub-light source to emit green color light; and
the supplying of the power to the light source comprises adjusting the power supplied to the red sub-light source.

19. A liquid crystal display device comprising:
a liquid crystal display panel;
a light source located in back of the liquid crystal display panel and including a light emitting diode;
a temperature sensor to measure temperature of the light source;
a light source driver to supply power to the light source; and
a controller to control the light source driver based on the temperature measured by the temperature sensor.

20. The liquid crystal display device according to claim 19, wherein:
the light source comprises a first sub-light source located in an upper portion and a second sub-light source located in a lower portion; and
the light source driver comprises a first sub-light source driver to supply the power to the first sub-light source and a second sub-light source driver to supply the power to the second sub-light source.

21. The liquid crystal display device according to claim 20, wherein:
the temperature sensor comprises a first temperature sensor measuring temperature of the first sub-light source and a second temperature sensor measuring the second sub-light source; and
the controller controls the light source driver to apply a relatively low power to one of the first sub-light source and the second sub-light source, which has a higher temperature of the measured temperatures.

22. The liquid crystal display device according to claim 20, further comprising:
a light guide plate located between the first sub-light source and the second sub-light source.

23. The liquid crystal display device according to claim 19, wherein:
the light emitting diode comprises at least a red sub-light source to emit red color light, a blue sub-light source to emit blue color light and a green sub-light source to emit green color light; and
the controller controls the light source driver to adjust the power supplied to the red sub-light source based on the result of temperature measurement.

24. A display device comprising:
a display panel;
a light source to supply light to the display panel;
a light source driver to supply power to the light source; and
a controller to control the light source driver to adjust the supplied power according to a location of the light source and a temperature of the light source.

25. A display device, comprising:
a display panel;
a first light source to supply a first light to the display panel;
a second light source to supply a second light to the display panel;
a light source driver to supply a first power and a second power to the first light source and to second light source, respectively; and
a controller to control the light source driver to adjust at least one of the first power and the second power according to a state of the first light source and to second light source.
